# EUROPÄISCHE PATENTSCHRIFT

(11) **EP 3 844 414 B1**
(45) Veröffentlichungstag und Bekanntmachung des Hinweises auf die Patenterteilung: **12.04.2023**
(21) Anmeldenummer: 19765649.9
(22) Anmeldetag: 27.08.2019
(51) Int. Cl.: F16D 25/0638, B60K 6/387, B60K 6/48, F16D 25/12

(54) **HYBRIDMODUL MIT TRENNKUPPLUNG SOWIE BETÄTIGUNGSEINRICHTUNG**
HYBRID MODULE WITH DISCONNECT COUPLING AND ACTUATING DEVICE
MODULE HYBRIDE AVEC DISPOSITIF D'ACCOUPLEMENT ET D'ACTIONNEMENT DE SECTIONNEUR

(30) Priorität: 27.08.2018 DE 102018120838; 02.08.2019 DE 102019120899
(43) Veröffentlichungstag der Anmeldung: 07.07.2021
(73) Patentinhaber: Schaeffler Technologies AG & Co. KG, 91074 Herzogenaurach (DE)
(72) Erfinder: DAIKELER, René, 77880 Sasbach (DE); MAIENSCHEIN, Stephan, 76534 Baden-Baden (DE); HÜGEL, Christian, 77866 Rheinau (DE); VOGEL, Florian, 77815 Bühl (DE)
(86) Internationale Anmeldenummer: PCT/DE2019/100775
(87) Internationale Veröffentlichungsnummer: WO 2020/043240

(56) Entgegenhaltungen:
- DE-A1-102006 044 218
- GB-A- 2 446 153
- KR-A- 20160 019 116
- US-A- 5 542 517
- US-A1- 2003 010 593
- US-A1- 2010 326 785

## Beschreibung

Die Erfindung betrifft ein Hybridmodul für einen Antriebsstrang eines Kraftfahrzeuges, wie ein Pkw, Lkw, Bus oder sonstiges Nutzfahrzeug, mit einer Trennkupplung sowie einer auf diese Trennkupplung betätigend einwirkenden Betätigungseinrichtung.

Aus DE 10 2009 059 944 A1 ist ein Hybridmodul für einen Antriebsstrang eines Fahrzeugs bekannt, wobei eine nasse Lamellenkupplung des Hybridmoduls im Momentenfluss zwischen einem Verbrennungsmotor und einem koaxial zum Hybridmodul angeordneten Elektromotor angeordnet ist. Die Lamellenkupplung kann von einem an einer Getriebeeingangswelle gelagerten drehfesten Betätigungssystem hydraulisch betätigt werden.

Ferner ist aus der US 2010/0326785 A1 ein Hybridmodul mit nasser Lamellenkupplung, mitdrehender Betätigungseinrichtung und Fliehölkompensationseinrichtung bekannt.

Es besteht ein ständiges Bedürfnis eine Trennkupplung in einem Hybridmodul präzise betätigen zu können und unnötige Belastungen zu vermeiden. Insbesondere können Herausforderungen zum Ausgestalten von Hybridmodulen in dem Umstand liegen, dass bei Konzepten ohne einen Dämpfer die entstehenden Wechselmomente (bis zu 1600 Nm) über eine Kupplungsanordnung und/oder die Trennkupplung schlupffrei oder zumindest schlupfarm zu übertagen sind.

Es ist die Aufgabe der Erfindung Maßnahmen aufzuzeigen, die ein präzises Betätigen einer Trennkupplung in einem Hybridmodul sowie eine Vermeidung unnötiger Belastungen ermöglichen. Insbesondere ist es die Aufgabe der Erfindung auch ohne einem im Hybridmodul vorgesehenen Drehschwingungsdämpfer eine zumindest schlupfarme Übertragung von hohen Wechselmomenten von bis zu 1600 Nm zu ermöglichen.

Die Lösung der Aufgabe erfolgt erfindungsgemäß durch ein Hybridmodul mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist ein Hybridmodul für einen Antriebsstrang eines Kraftfahrzeugs vorgesehen mit einer Trennkupplung zum Kuppeln einer eingangsseitigen Antriebswelle, insbesondere Kurbelwelle, einer Brennkraftmaschine zum mechanischen Antrieb des Kraftfahrzeugs mit einer ausgangsseitigen Zwischenwelle, insbesondere Rotorwelle, einer elektrischen Maschine zum elektrischen Antrieb des Kraftfahrzeugs und einer mit der Antriebswelle oder mit der Zwischenwelle mitrotierbare Betätigungseinrichtung zum Betätigen der Trennkupplung, wobei die Betätigungseinrichtung eine mit einer Druckquelle verbindbare Druckkammer zur Bereitstellung eines mit Hilfe eines Hydraulikmittels aufbaubaren hydraulischen Betätigungsdrucks zum Betätigen der Trennkupplung und eine Kompensationseinrichtung zur zumindest teilweisen Kompensation einer durch an dem Hydraulikmittel angreifenden Fliehkräfte verursachten Druckänderung in der Druckkammer aufweist.

Da das Betätigungssystem mit der eingangsseitigen Antriebswelle oder ausgangsseitigen Zwischenwelle mitrotiert, kann eine Lagerung des Betätigungssystems eingespart werden. Stattdessen kann das Betätigungssystem drehfest mit der Antriebswelle beziehungsweise mit der Zwischenwelle befestigt sein. Die Bauteileanzahl und die Herstellungskosten können dadurch reduziert werden. Zudem ist über eine feste Befestigung des Betätigungssystems mit der Antriebswelle beziehungsweise mit der Zwischenwelle eine Übertragung hoher Drehmomente, insbesondere von Wechselmomenten bis 1600 Nm, ohne unnötige Belastungen problemlos möglich. Ein in diesem Fall ansonsten besonders stark belastetes Lager zwischen dem Betätigungssystem und der mit dem Betätigungssystem befestigten Welle ist entfallen, so dass die Haltbarkeit und die Lebensdauer verbessert ist.

Eine Axialseite der Druckkammer der Betätigungseinrichtung kann von einer axial verlagerbaren Trennwand verschlossen sein, die in Abhängigkeit von dem Betätigungsdruck in der Druckkammer, insbesondere gegen die Federkraft einer Rückstellfeder, axial verlagert werden kann, um die Trennkupplung zu betätigen. Beispielsweise kann ein von der Trennwand abstehender Betätigungsanschlag, der beispielsweise an einer Stirnseite eines Rohrs oder Fingers ausgebebildet ist, an einem radial inneren Rand einer, insbesondere als Tellerfeder ausgestalteten, Hebelfeder als Betätigungselement direkt oder indirekt anschlagen. Die Hebelfeder kann schwenkbar gelagert sein und durch eine Änderung ihrer Konizität radial außerhalb zu der Druckkammer an einer Anpressplatte der Trennkupplung angreifen. Wenn durch den Betätigungsdruck in der Druckkammer der Betätigungseinrichtung die Trennwand gegen den radial inneren Rand des Betätigungselements, insbesondere eine schwenkbaren Hebelfeder oder ein im Wesentlichen rein axial verlagerbaren Betätigungstopf, angreift, kann das Betätigungselement die Anpressplatte axial verlagern, um bei einer als "normally closed" ausgestalteten Trennkupplung die Trennkupplung zu öffnen oder bei einer als "normally open" ausgestalteten Trennkupplung die Trennkupplung zu schließen.

Durch die mitrotierende Betätigungseinrichtung wird jedoch auch das in der Drucckammer der Betätigungseinrichtung eingepumpte Hydraulikfluid mitrotiert, so dass an dem Hydraulikfluid Fliehkräfte angreifen, welche das Hydraulikfluid nach radial außen treiben. Dadurch drückt das Hydraulikfluid verstärkt auf die Trennwand wodurch sich der in der Druckkammer einstellende Druck fliehkraftbedingt in Abhängigkeit von der aktuellen Drehzahl über den ursprünglich vorgesehenen Betätigungsdruck erhöht. Dies kann grundsätzlich zumindest zu einem unpräzisen Betätigen der Trennkupplung führen, wodurch ein schlupfloses oder schlupfarmes Übertragen eines Drehmoments erschwert oder sogar vereitelt werden kann. Mit Hilfe der Kompensationseinrichtung kann jedoch der fliehkraftbedingte Anteil des Druckes in der Druckkammer zumindest teilweise kompensiert werden, so dass die Betätigung der Betätigungseinrichtung trotz der mitrotierenden Ausgestaltung unabhängig von der aktuellen Drehzahl ist oder zumindest das Ausmaß der fliehkraftbedingten Abhängigkeit von der aktuellen Drehzahl reduziert ist. Die Kompensationseinrichtung kann hierzu insbesondere an der von der Druckkammer weg weisenden Axialseite der Trennwand mit einer Kompensationskraft angreifen, deren Betrag insbesondere ebenfalls fliehkraftabhängig ist, so dass sich die fliehkraftabhängigen Kräfte, die von der Druckkammer aus und von der Kompensationseinrichtung aus an der Trennwand angreifen, zumindest teilweise, vorzugsweise zumindest größtenteils, gegeneinander aufheben. Durch die Kompensationseinrichtung kann eine durch die mitrotierende Betätigungseinrichtung verursachte drehzahlabhängige Druckänderung in der Druckkammer ausgeglichen werden, so dass ein präzises Betätigen einer Trennkupplung in einem Hybridmodul sowie eine Vermeidung unnötiger Belastungen ermöglicht ist. Insbesondere ist dadurch auch ohne einem im Hybridmodul vorgesehenen Drehschwingungsdämpfer eine zumindest schlupfarme Übertragung von hohen Wechselmomenten von bis zu 1600 Nm zu ermöglicht.

Unter der Betätigungseinrichtung wird die innerhalb des Hybridmoduls vorgesehene Baueinheit ohne Zuleitungen oder angeschlossene Druckquelle verstanden. Die Betätigungseinrichtung wird bei einer einrückenden Trennkupplung auch als Kupplungseinrücker beziehungsweise bei einer ausrückenden Trennkupplung als Kupplungsausrücker bezeichnet. Die Betätigungseinrichtung kann als Druckkammer einen koaxial zur befestigten Welle verlaufenden Ringraum aufweisen, in den die Trennwand in der Art eines Kolbens axial geführt ist. Diese Ausgestaltung wird auch als CSC ("concentric slave cylinder") bezeichnet. Die Zwischenwelle kann eine einen Rotor der elektrischen Maschine tragende Rotorwelle sein oder zumindest mittelbar mit einer derartigen Rotorwelle der elektrischen Maschine gekoppelt sein. Die Zwischenwelle kann, insbesondere über mindestens eine weitere Trennkupplung, mit einer Getriebeeingangswelle eines Kraftfahrzeuggetriebes gekoppelt sein. Die Antriebswelle kann von der insbesondere Verbrennungsmotor ausgestalteten Brennkraftmaschine angetrieben sein. Insbesondere ist die Antriebswelle als Kurbelwelle der Brennkraftmaschine ausgestaltet. Mit der Antriebswelle kann gegebenenfalls noch ein Schwungrad und/oder ein Drehschwingungsdämpfer zur Dämpfung von durch die motorische Verbrennung in der Brennkraftmaschine verursachten Drehungleichförmigkeiten verbunden sein.

Die Trennkupplung ist erfindungsgemäss als eine normal eingerückte Kupplung ausgebildet. Demnach ist es zudem vorteilhaft, wenn ein Gehäuse der Betätigungseinrichtung, insbesondere ein Aktorgehäuse des Kupplungsausrückers, auf einer mit dem Ausgang der Trennkupplung drehfest verbundenen Zwischenwelle angeordnet ist. Das Gehäuse ist dabei vorzugsweise drehfest auf der Zwischenwelle angebracht. Dadurch wird der Aufbau des Hybridmoduls weiter vereinfacht. Es können hydraulische Versorgungskanäle beziehungsweise zumindest ein hydraulischer Versorgungskanal der Betätigungseinrichtung in der Zwischenwelle integriert und/oder eingebracht sein, so dass der Aufbau weiter vereinfacht und der Montageaufwand reduziert sein kann. Grundsätzlich ist es möglich, dass die Kompensationseinrichtung eine mit einem weiteren Hydraulikmittel oder mit demselben Hydraulikmittel beaufschlagbare Kompensationskammer zur Bereitstellung eines mit Hilfe des Hydraulikmittels aufbaubaren hydraulischen Kompensationsdrucks aufweist, wobei insbesondere die Druckkammer und die Kompensationskammer über eine axial verlagerbare Trennwand voneinander getrennt sind. Weist die Betätigungseinrichtung eine hydraulische Kompensationskammer auf, um einen Fliehkrafteinfluss auf ein Hydraulikmittel innerhalb einer (separat zu der Kompensationskammer ausgebildeten) Druckkammer des Kupplungsausrückers auszugleichen, wird die Funktionalität der Betätigungseinrichtung in jeglichem Betriebszustand sichergestellt. Es ist aber auch von Vorteil, wenn die Kompensationseinrichtung ohne zusätzliche, mittels einer weiteren Hydraulikmittelleitung separat mit Hydraulikmittel versorgte Kompensationskammer auskommt. In anderen Worten ausgedrückt, kann ein Hybridmodul mit einer speziell ausgebildeten Trennkupplung umgesetzt sein, wobei eine Betätigung durch einen wellenorientierten, mitdrehenden Nehmerzylinder, insbesondere einer als Kupplungsausrücker ausgestalteten Betätigungseinrichtung, umgesetzt wird.

Insbesondere weist die Betätigungseinrichtung nur eine einzige Versorgungsleitung zur Versorgung der Betätigungseinrichtung mit einem Hydraulikmittel auf, wobei die Versorgungsleitung an der Kompensationseinrichtung vorbei mit der Druckkammer kommuniziert. Der Fertigungsaufwand und die Herstellungskosten sind dadurch geringgehalten. Die Kompensationseinrichtung kann insbesondere autonom, das heißt ohne Zuführung von externen Hilfsmitteln oder Energie, arbeiten. Vorzugsweise kann die Kompensationseinrichtung nicht-hydraulisch betrieben werden, beispielsweise indem durch mechanische Wirkmechanismen eine an einem Bauteil der Kompensationseinrichtung angreifende Fliehkraft in eine an der Trennwand angreifenden Kompensationskraft gewandelt wird.

Vorzugsweise ist die Kompensationseinrichtung ausgestaltet ausschließlich durch an der Kompensationseinrichtung angreifende Fliehkräfte eine, insbesondere über eine axial verlagerbare Trennwand, an der Druckkammer angreifende Kompensationskraft aufzubauen. Da sowohl die störende fliehkraftbedingte Druckänderung in der Drucckammer als auch die diese Druckänderung kompensierende Kompensationskraft ausschließlich durch Fliehkräfte verursacht werden, lässt sich eine sehr exakte und möglichst vollständige Kompensation des Anteils der Druckänderung erreichen. Die Kompensationskraft und die Druckänderung sind über die Drehzahl und die dadurch angreifenden Fliehkräfte direkt miteinander gekoppelt, so dass sich eine Änderung in der störenden fliehkraftbedingten Druckänderung sofort in eine entsprechende Änderung der kompensierenden Kompensationskraft niederschlägt.

Besonders bevorzugt weist die Kompensationseinrichtung ein unter Fliehkrafteinfluss verformbares und/oder verlagerbares, insbesondere als Federelement ausgestaltetes, Sensierelement zum Aufbau einer mit den an dem Sensierelement angreifenden Fliehkräften korrespondierende, insbesondere über eine axial verlagerbare Trennwand, an der Druckkammer angreifende Kompensationskraft auf. Das Sensierelement kann die angreifende Fliehkraft beispielsweise derart sensieren, dass das Sensierelement in Abhängigkeit von der angreifenden Sensierkraft um einen korrespondierenden Anteil verformt und/oder verlagert wird. Diese Reaktion des Sensierelements auf die angreifende Fliehkraft kann von der Kompensationseinrichtung gegebenenfalls geeignet verstärkt zum Aufbau einer hierzu korrespondierenden Kompensationskraft genutzt werden. Hierzu sind verschiedene fliehkraftbasierte Wirkprinzipien möglich, die über eine kinematische mechanische Koppelung eine zur angreifenden Fliehkraft korrespondierende Kompensationskraft aufbauen können, wie insbesondere nachfolgenden exemplarisch dargestellt wird. Hierbei ist es grundsätzlich möglich nur genau eines er nachfolgend dargestellten Wirkprinzipen vorzusehen oder verschiedene Wirkprinzipien gleichzeitig in Kombination vorzusehen.

Insbesondere weist die Kompensationseinrichtung eine Tellerfeder auf, wobei die Tellerfeder mit einem radial äußeren Kraftrand an einem Gehäuse der Betätigungseinrichtung und mit einem radial inneren Kraftrand an einer die Druckkammer zumindest teilweise begrenzenden und axial verlagerbaren Trennwand abgestützt ist, wobei der, insbesondere über in radialer Richtung abstehende Federzungen ausgebildeter, innere Kraftrand fliehkraftabhängig zum Aufbau einer in axialer Richtung auf die Drucckammer wirkenden Kompensationskraft nach radial außen verbiegbar ist. Die Tellerfeder weist insbesondere von einem Tellerfederring nach radial innen abstehende Federzungen auf, welche am radial inneren freien Ende Federzungenbereiche ausbilden können, die als radial inneren Kraftrand dienen können. Die Federzungen können insbesondere zur Radialebene angeschrägt verlaufen. Unter Fliehkrafteinfluss kann der radial innere Kraftrand nach radial außen wegbiegen, so dass der radial innere Kraftrand bestrebt ist mit seinem Bewegungsanteil in axialer Richtung bei der Biegebewegung die Trennwand in axialer Richtung zu verlagern, insbesondere wegzudrücken. Dadurch kann mit sehr einfachen und kostengünstigen mechanischen Mitteln eine zu der fliehkraftbedingten Druckänderung in der Druckkammer korrespondierende Kompensationskraft aufgebaut werden.

Vorzugsweise weist die Kompensationseinrichtung einen mit einer fluiden und/oder gelartigen und/oder pastösen Fliehkraftmasse zumindest teilweise gefüllten Schlauch auf, wobei der Schlauch an einem den Schlauch radial außen abdeckenden Gehäuse der Betätigungseinrichtung und an einem die Druckkammer zumindest teilweise begrenzenden und axial verlagerbaren Trennwand abgestützt ist, wobei der Schlauch durch ein fliehkraftbedingtes Anpressen der Fliehkraftmasse auf das Gehäuse zu gegen die Trennwand zum Aufbau einer in axialer Richtung auf die Druckkammer wirkenden fliehkraftabhängigen Kompensationskraft verformbar ist. Die leicht verformbare Fliehkraftmasse in dem Schlauch kann fliehkraftbedingt nach radial außen gegen das Gehäuse gedrückt werden, wodurch das Material der Fliehkraftmasse in axialer Richtung auszuweichen versucht. Dadurch kann der flexible Schlauch in fliehkraftbedingt in axialer Richtung verformt werden, wodurch die an der Trennwand angreifende Kompensationskraft aufgebaut wird.

Besonders bevorzugt weist die Kompensationseinrichtung eine gelenkig an einem Gehäuse der Betätigungseinrichtung und an einem die Druckkammer zumindest teilweise begrenzenden und axial verlagerbaren Trennwand abgestützte Fliehkraftmasse auf, wobei die Fliehkraftmasse, insbesondere in der Art eines Kniehebels, unter Fliehkrafteinfluss die Trennwand zum Aufbau einer in axialer Richtung auf die Druckkammer wirkenden fliehkraftabhängigen Kompensationskraft die Trennwand axial verlagert. Die Fliehkraftmasse kann gelenkig mit zwei Streben verbunden sein, wobei die eine Strebe mit dem Gehäuse und die andere Strebe mit der Trennwand jeweils gelenkig verbunden sind. Unter Fliehkrafteinfluss kann die Fliehkraftmasse nach radial außen getrieben werden, wodurch die Fliehkraftmasse versucht die Streben derart zu verschwenken, dass sich die axiale Erstreckung vergrößert. Dadurch kann nach dem Prinzip des Kniehebels fliehkraftbedingt die an der Trennwand angreifende Kompensationskraft aufgebaut werden.

Insbesondere weist die Kompensationseinrichtung ein, insbesondere als Schraubendruckfeder oder Blattfeder, ausgestaltetes nach radial innen konvex verlaufendes Federelement auf, wobei das Federelement an einem Gehäuse der Betätigungseinrichtung und an einer die Druckkammer zumindest teilweise begrenzenden und axial verlagerbaren Trennwand abgestützt ist, wobei das Federelement zum Aufbau einer in axialer Richtung auf die Druckkammer wirkenden fliehkraftabhängigen Kompensationskraft unter steigendem Fliehkrafteinfluss das Ausmaß seiner Konvexität reduziert. Das Federelement kann zwischen dem Gehäuse und der Trennwand, insbesondere mit Vorspannung, verpresst sein. Durch die nach radial innen konvexe Form des Federelements entlang ihres axialen Verlauf, hat das Federelement das Bestreben unter Fliehkrafteinfluss, wenn der konvexe Mittelteil nach radial außen getrieben wird, seine axiale Erstreckung zu erhöhen, so dass das Federelement fliehkraftbedingt mit einer größeren Federkraft an der Trennwand angreift und eine entsprechend hohe fliehkraftbedingte Kompensationskraft aufbaut.

Vorzugsweise weist die Kompensationseinrichtung eine an einem Gehäuse der Betätigungseinrichtung und an einem die Druckkammer zumindest teilweise begrenzenden und axial verlagerbaren Trennwand über ein zur Radialebene angeschrägtes Rampensystem abgestützte Fliehkraftmasse auf, wobei die die Fliehkraftmasse unter Fliehkrafteinfluss die Trennwand zum Aufbau einer in axialer Richtung auf die Drucckammer wirkenden fliehkraftabhängigen Kompensationskraft die Trennwand axial verlagert. Das Rampensystem kann eine von der Fliehkraftmasse und eine zumindest mittelbar von der Trennwand ausgebildete zur Radialebene angeschrägte Gleitfläche ausbilden, die zur Veränderung der axialen Erstreckung des Rampensystems aneinander abgleiten und/oder abrollen können. Zusätzlich kann auch zwischen der Fliehkraftmasse und dem Gehäuse ein Rampensystem ausgebildet sein, um den Effekt der radialen Verlagerung der Fliehkraftmasse zu verstärken. Wenn die Fliehkraftmasse unter Fliehkrafteinfluss nach radial außen getrieben wird, hat das Rampensystem das Bestreben seine axiale Erstreckung zu vergrößern, so dass das Rampensystem eine entsprechend hohe fliehkraftbedingte Kompensationskraft auf die Trennwand aufprägen kann.

Besonders bevorzugt ist die Betätigungseinrichtung drehfest mit der Antriebswelle oder mit der Zwischenwelle verbunden, wobei die mit der Betätigungseinrichtung drehfest verbundene Antriebswelle oder Zwischenwelle eine Versorgungsbohrung zur Versorgung der Druckkammer mit dem Hydraulikfluid aufweist. Die Versorgungsbohrung kann insbesondere über eine radial oder zur Radialebene angeschrägte Verbindungsbohrung mit der Druckkammer kommunizieren. Vorzugsweise ist in der mit der Betätigungseinrichtung befestigten Welle eine in Umfangsrichtung geschlossen verlaufende Ringnut vorgesehen, über welche die Druckkammer in einer beliebigen Relativdrehlage mit der Versorgungsbohrung kommunizieren kann. Separate Hydraulikleitungen zum Betätigen der Betätigungseinrichtung sowie der dafür benötigte Bauraum kann dadurch eingespart werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Längsschnittdarstellung eines Hybridmoduls nach einem ersten Ausführungsbeispiel,
Fig. 2: eine schematische Längsschnittdarstellung eines Hybridmoduls nach einem zweiten Ausführungsbeispiel,
Fig. 3: eine schematische Detailansicht einer Betätigungseinrichtung des Hybridmoduls aus Fig. 2,
Fig. 4: eine schematische Längsschnittdarstellung eines Hybridmoduls nach einem dritten Ausführungsbeispiel,
Fig. 5: eine schematische Längsschnittdarstellung eines Hybridmoduls nach einem vierten Ausführungsbeispiel,
Fig. 6: eine schematische Detailansicht einer Betätigungseinrichtung des Hybridmoduls aus Fig. 5,
Fig. 7: eine schematische Längsschnittdarstellung eines Hybridmoduls nach einem fünften Ausführungsbeispiel,
Fig. 8: eine schematische Detailansicht einer Betätigungseinrichtung des Hybridmoduls aus Fig. 7,
Fig.9: eine schematische Längsschnittdarstellung eines Hybridmoduls nach einem sechsten Ausführungsbeispiel,
Fig. 10: eine schematische Detailansicht einer Betätigungseinrichtung des Hybridmoduls aus Fig. 9,
Fig.11: eine schematische Längsschnittdarstellung eines Hybridmoduls nach einem siebten Ausführungsbeispiel und
Fig. 12: eine schematische Detailansicht einer Betätigungseinrichtung des Hybridmoduls aus Fig. 11.

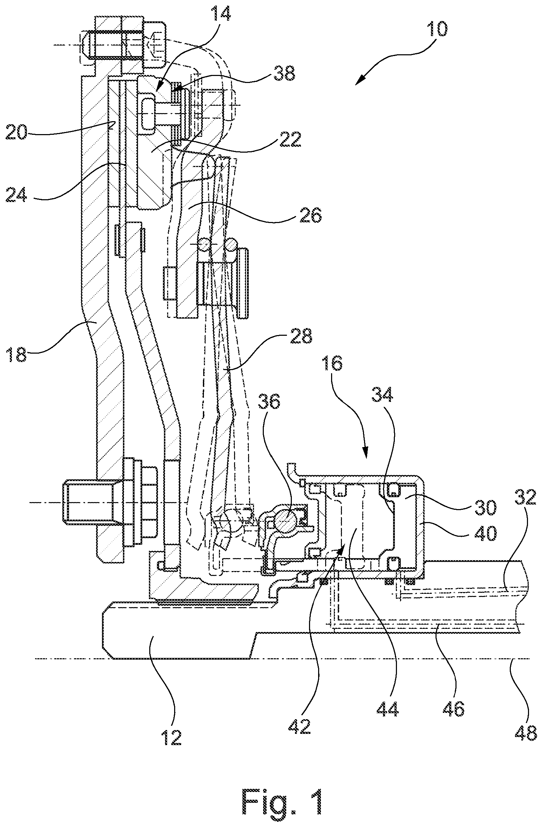

Das in Fig. 1 dargestellte für einen Antriebstrang eines Hybrid-Kraftfahrzeugs vorgesehene Hybridmodul 10 kann zum Ankoppeln einer, insbesondere als Kurbelwelle ausgestalteten, Antriebswelle einer als Verbrennungsmotor ausgestalteten Brennkraftmaschine mit einer Zwischenwelle 12 ausgestaltet sein. Die Zwischenwelle 12 kann mit einem Rotor einer elektrischen Maschine gekoppelt sein oder sogar selbst eine Rotorwelle für den Rotor der elektrischen Maschine ausbilden. Die elektrische Maschine kann im motorischen Betrieb als Elektromotor das Kraftfahrzeug antreiben.

Die Zwischenwelle 12 kann mit einer Getriebeeingangswelle eines Kraftfahrzeuggetriebes gekoppelt sein oder die Getriebeeingangswelle ausbilden. Das Hybridmodul 10 weist eine Trennkupplung 14 auf, die von einem Betätigungssystem 16 hydraulisch betätigt werden kann.

Die Trennkupplung 14 weist eine mit der Antriebswelle verbundenen Schwungscheibe 18 auf, die gleichzeitig eine Gegenscheibe 20 ausbildet. Mit Hilfe einer axial verlagerbaren Anpressplatte 22 kann eine mit der Zwischenwelle 12, beispielsweise über eine Steckverzahnung, drehfest aber axial verschiebbar gekoppelte Kupplungsscheibe 24 reibschlüssig verpresst werden. Mit der Schwungscheibe 18 ist ein Kupplungsdeckel 26 verbunden an dem eine als Tellerfeder ausgestaltete Hebelfeder 28 als Betätigungselement zum axialen Verlagern der Anpressplatte 22 schwenkbar gelagert ist. Das in der Art eines CSC ausgestaltete Betätigungssystem 16 weist eine ringförmige koaxiale Druckkammer 30 auf, in die über eine in der Zwischenwelle 12 vorgesehene Versorgungsleitung 32 ein Betätigungsdruck aufgebaut werden kann. Die Druckkammer 30 ist an einer Axialseite mit einer Trennwand 34 verschlossen, die in Abhängigkeit von dem resultierenden an der Trennwand 34 angreifenden Druck axial verlagert werden kann. Die Trennwand 34 greift, beispielsweise über ein als Schrägkugellager ausgestaltetes Betätigungslager 36, an dem radial inneren Rand der Hebelfeder 28 an, um durch eine Änderung der Konizität der Hebelfeder 28 ein Verschwenken der Hebelfeder um einen in Umfangsrichtung verlaufenden Schwenkpunkt herbeizuführen und die Anpressplatte 22 zu verlagern. Erfindungsgemäss ist die Trennkupplung 14 als normal-eingerückte ("normally closed") Kupplung ausgestaltet, bei der die Anpressplatte 22 von einer als Blattfederpaket ausgestalteten Rückstellfeder 38 geschlossen und bei einem Betätigungsdruck in der Druckkammer 30 des Betätigungssystems 16 gegen die Federkraft der Rückstellfeder 38 geöffnet wird.

Das Betätigungssystem 16 weist ein die Druckkammer 30 begrenzendes und die Trennwand 34 aufnehmendes Gehäuse 40 auf, das fest mit der Zwischenwelle 12 verbunden ist, so dass das Betätigungssystem 16 mit der Zwischenwelle 12 mitrotierend ausgebildet ist und ein Lager zwischen dem Betätigungssystem 16 und der Zwischenwelle 12 eingespart ist. Um eine durch eine steigende Drehzahl der Zwischenwelle 12 durch Fliehkrafteinflüsse auf das in der Druckkammer 30 befindliche Hydraulikmittel verursachte Druckerhöhung in der Druckkammer 30 zu kompensieren, weist das mitrotierende Betätigungssystem eine mitrotierende Kompensationseinrichtung 42 auf, die in Abhängigkeit von der Drehzahl der Zwischenwelle 12 an der von der Druckkammer 30 weg weisenden Axialseite der Trennwand 34 eine Kompensationskraft aufprägt, um die fliehkraftbedingte Druckerhöhung in der Druckkammer 30 zu kompensieren, so dass die an der Trennwand 34 angreifende resultierende Kraft im Wesentlichen unabhängig von der Drehzahl der Zwischenwelle 12 und den dadurch verursachten Fliehkräften ist und lediglich die ursprünglich über die Versorgungsleitung 32 hydraulisch beaufschlagte Betätigungskraft angreift. In dem in Fig. 1 dargestellten Ausführungsbeispiel weist die Kompensationseinrichtung 42 eine in dem Gehäuse 40 ausgebildete Kompensationskammer 44 auf, die im Wesentlichen bei Umgebungsdruck über eine separate Hydraulikmittelleitung 46 mit Hydraulikmittel versorgt ist und gegen die Trennwand 34 drückt. Die fliehkraftbedingten an der Trennwand 34 angreifenden Kraftanteile aus der Druckkammer 30 und aus der Kompensationskammer 44 können sich gegenseitig aufheben.

Das Hybridmodul 10 ist hinsichtlich des Rotors seiner elektrischen Maschine nur unvollständig schematisch dargestellt. Die elektrische Maschine ist auf typische Weise ausgebildet und kann einen in einem Modulgehäuse des Hybridmoduls 10 aufgenommenen Stator aufweisen. Radial innerhalb des Stators ist der Rotor der elektrischen Maschine drehbar gelagert. Der Rotor ist entweder dauerhaft mit einer Getriebeeingangswelle gekoppelt oder weiter bevorzugt über zumindest eine Kupplung, besonders bevorzugt mehrere Kupplungen, wie eine Doppelkupplung, von dieser Getriebeeingangswelle abkoppelbar. Der Rotor kann weiterhin dauerhaft mit der Zwischenwelle 12 des Hybridmoduls 10 drehfest verbunden sein. Die Zwischenwelle 12 ist mit einer durch die Kupplungsscheibe 24 gebildete Ausgangsseite der Trennkupplung 14 drehfest verbunden. Die Kupplungsscheibe 24 an sich weist auf typische Weise ein Trägerteil auf, das zu einer radialen Außenseite den Reibbelag drehfest aufnimmt. Zu einer radialen Innenseite ist eine Nabe mit dem Trägerteil verbunden, welche Nabe drehfest mit der Zwischenwelle 12 weiter verbunden ist. Die Betätigungseinrichtung 16 ist hinsichtlich ihres Betätigungslagers 36 auf einer dem Rotor zugewandten Seite der Trennkupplung 14 angeordnet ist. Diese als Rotorseite bezeichnete Seite ist somit eine der Verbrennungskraftmaschine abgewandte Seite der Trennkupplung 12. Die Betätigungseinrichtung 16 ist bezogen auf die Trennkupplung 14 ausgangsseitig mitdrehend ausgestaltet.

Die Versorgungsleitung 32 und/oder die Hydraulikmittelleitung 46 ist bevorzugt durch mehrere Bohrungen umgesetzt. Hinsichtlich der Versorgungsleitung 32 ist es zudem erkennbar, dass ein erster in axialer Richtung verlaufender Bohrungsbereich in Bezug auf eine Drehachse 48 des Hybridmoduls 10 schräg angestellt ist / verläuft, um eine Entlüftung des Systems zu erleichtern. Optional kann auch die Hydraulikmittelleitung 46, die in dem dargestellten Ausführungsbeispiel parallel zu der Drehachse 48 verläuft, abschnittsweise in Bezug auf die Drehachse 48 schräg angestellt sein. Die Kompensationskammer 44 ist über ein Frontschild zur Umgebung hin abgedichtet.

Somit ist die Trennkupplung 14 des ersten Ausführungsbeispiels normal geschlossen / eingerückt / normally closed ausgeführt. Die Lagerung der Trennkupplung 14 erfolgt über das Schwungrad 18 auf der Antriebswelle. Die Trennkupplung 14 / der Kupplungsdeckel 26 ist mit dem Schwungrad 18 verschraubt. Blattfedern sind innerhalb der Reibfläche angeordnet. Die Betätigung erfolgt durch einen CSC (konzentrischer Kupplungsausrücker; vorzugsweise mit einem Hydrostat-Aktor). Der CSC ist auf der Zwischenwelle 12 angebunden und rotiert mit dieser mit. Die Versorgung erfolgt über die Zwischenwelle 12, vorzugsweise durch Niederdruck bei nachfolgendem Stufenautomaten. Das CSC ist zudem vorzugsweise mit einer Druckkammer 30 sowie einer Kompensationskammer 44 zum Ausgleich des Fliehkrafteinflusses umgesetzt. Vorzugsweise ist ein separates Frontschild zur Darstellung der Kompensationskammer 44 vorhanden. Optional ist ein schräger Verlauf der in der Zwischenwelle 12 eingebrachten Versorgungsbohrung zur effektiven Entlüftung vorgesehen. Das Ausführungsbeispiel ist prinzipiell auch für eine als Mehrscheibenkupplung ausgebildete Trennkupplung 12 umsetzbar.

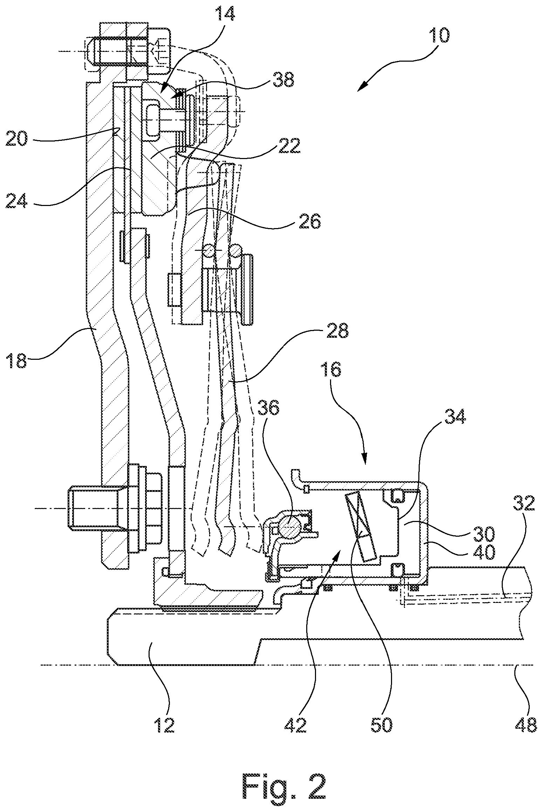

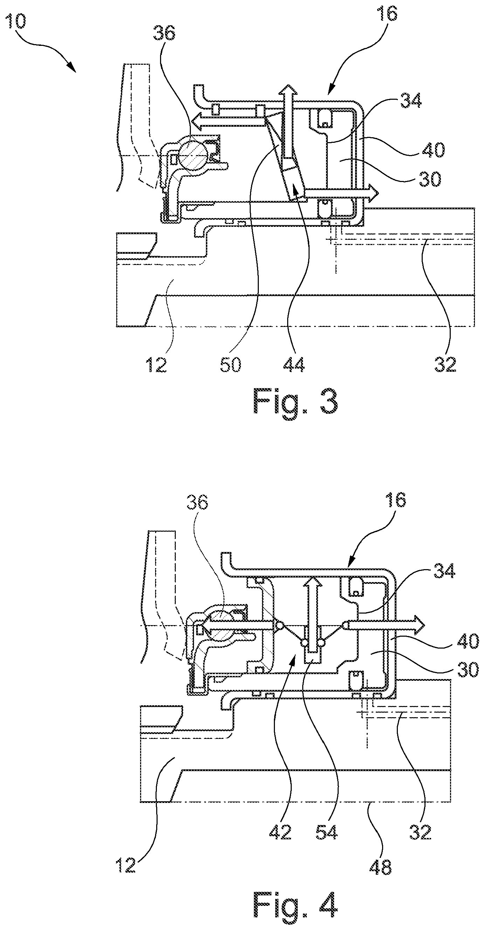

Bei dem in Fig. 2 dargestellten Ausführungsbeispiel des Hybridmoduls 10 ist im Vergleich zu dem in Fig. 1 dargestellten Ausführungsbeispiel des Hybridmoduls 10 bei der Kompensationseinrichtung 42 anstelle der Kompensationskammer 44 ein Federelement 50 vorgesehen, das als konisch ausgebildete, fliehkraftbeeinflusste Gegenfeder eine Kompensationskraft auf die Trennwand 34 aufprägen kann. Das Federelement 50 ist vorzugsweise als Tellerfeder ausgebildet, deren Kraftrand radial außen, und deren Zungen radial innen liegen, wodurch die Fliehkraft bei der konisch ausgebildeten Tellerfeder auf die Zungen wirkt, so dass durch Verkippung der Tellerfeder unter Fliehkrafteinfluss der Kraftrand den Fliehkrafteinfluss auf das Hydraulikmittel kompensieren kann. Das zur Radialebene angeschrägt ausgerichtete Federelement 50 ist radial außen an dem Gehäuse 40 axial abgestützt, so dass die Federzungen des Federelements 50 unter Fliehkrafteinfluss nach radial außen sowie mit einem Bewegungsanteil in axialer Richtung wegbiegen können, wie in Fig. 3 im Detail dargestellt ist.

Bei dem in Fig. 4 dargestellten Ausführungsbeispiel des Hybridmoduls 10 ist im Vergleich zu dem in Fig. 2 dargestellten Ausführungsbeispiel des Hybridmoduls 10 bei der Kompensationseinrichtung 42 anstelle des Federelements 50 ein mit einem verformbaren Fluid gefüllter mitrotierender Schlauch 52 vorgesehen. Unter Fliehkrafteinfluss kann das Fluid nach radial außen verdrängt werden, wodurch der axial an dem Gehäuse 40 abgestützte ringförmige und geschlossene Schlauch 52 auf die Trennwand 34 zu verformt werden kann und eine Kompensationskraft zum Ausgleich von Fliehkrafteinflüssen aufprägen kann.

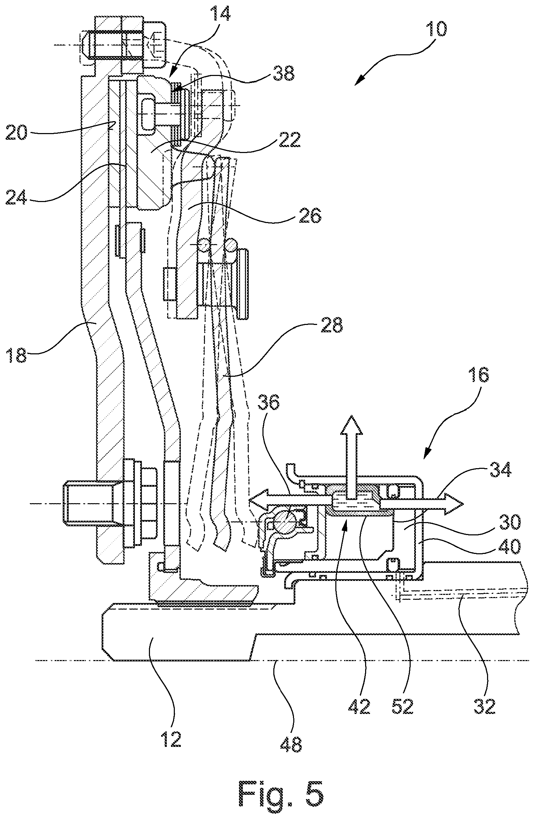

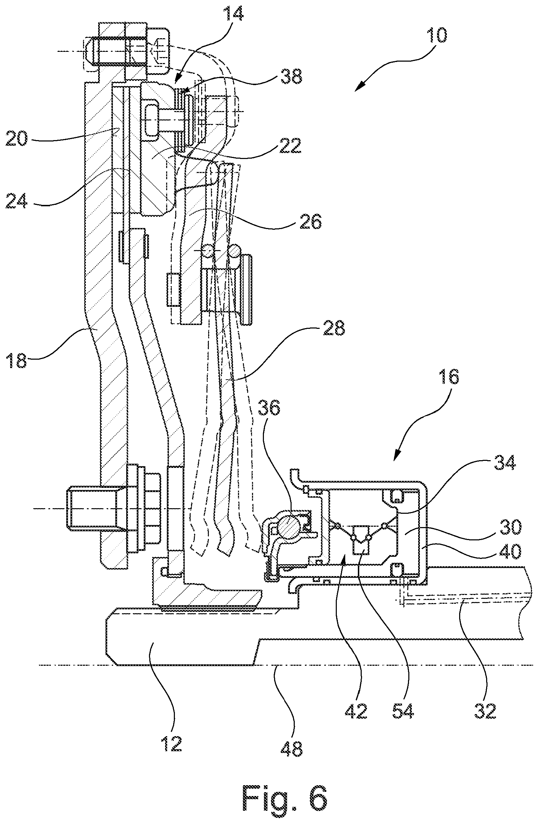

Bei dem in Fig. 5 dargestellten Ausführungsbeispiel des Hybridmoduls 10 ist im Vergleich zu dem in Fig. 4 dargestellten Ausführungsbeispiel des Hybridmoduls 10 bei der Kompensationseinrichtung 42 anstelle des Schlauchs 52 eine in der Art eines Kniehebels gelenkig an dem Gehäuse 40 und an der Trennwand 34 abgestützte Fliehkraftmasse 54 vorgesehen. Unter Fliehkrafteinfluss kann die mindestens eine Fliehkraftmasse 54, wobei vorzugsweise mehrere in Umfangsrichtung hintereinander, insbesondere gleichmäßig verteilt, angeordnete Fliehkraftmassen 54 vorgesehen sind, nach radial außen getrieben werden, wodurch an die Fliehkraftmasse 54 angelenkte Streben derart verschwenkt werden, dass der axiale Anteil ihrer Erstreckung sich erhöht und eine Kompensationskraft auf die Trennwand 34 aufgeprägt wird, wie in Fig. 6 im Detail dargestellt ist.

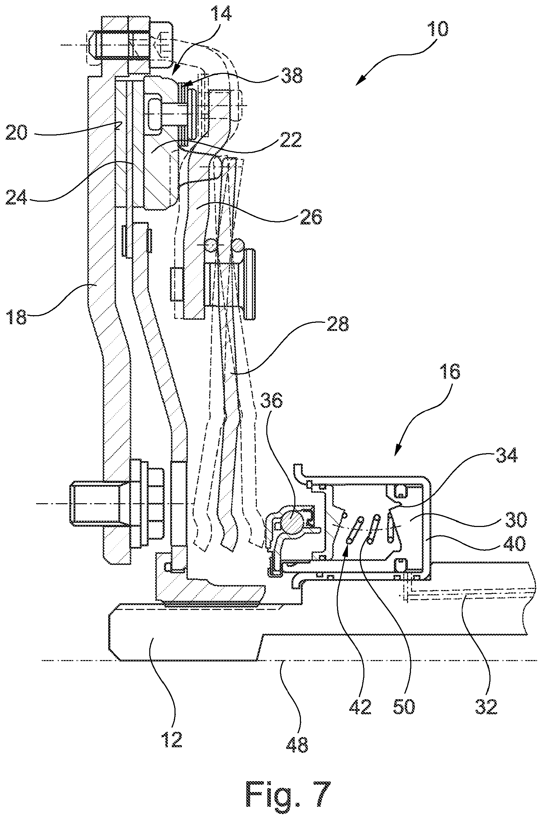

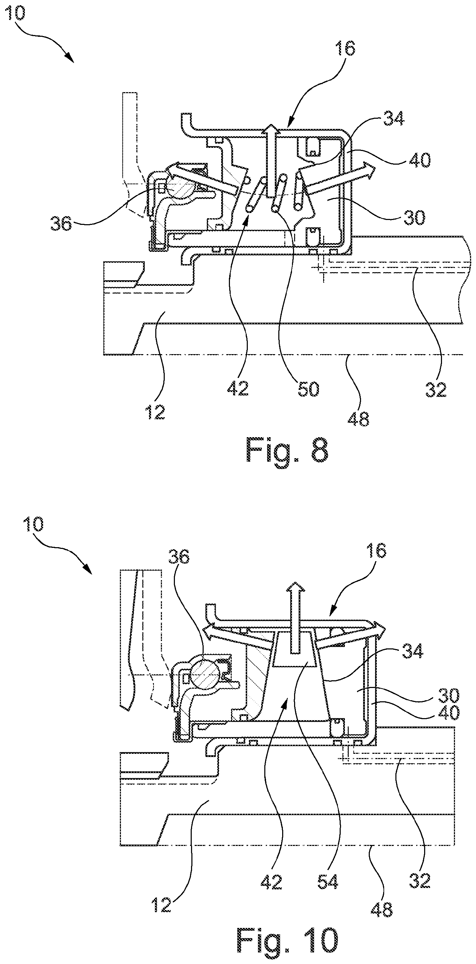

Bei dem in Fig. 7 dargestellten Ausführungsbeispiel des Hybridmoduls 10 ist im Vergleich zu dem in Fig. 5 dargestellten Ausführungsbeispiel des Hybridmoduls 10 bei der Kompensationseinrichtung 42 anstelle der angelenkten Fliehkraftmasse 54 ein als Schraubendruckfeder ausgestaltetes mitrotierendes Federelement 50 vorgesehen, das nach radial innen konvex verläuft. Unter Fliehkrafteinfluss kann der konvexe Teil des Federelements 50 nach radial außen getrieben werden, wodurch sich die axiale Erstreckung des Federelements 50 erhöht und eine Kompensationskraft auf die Trennwand aufgeprägt wird, wie in Fig. 8 im Detail dargestellt ist.

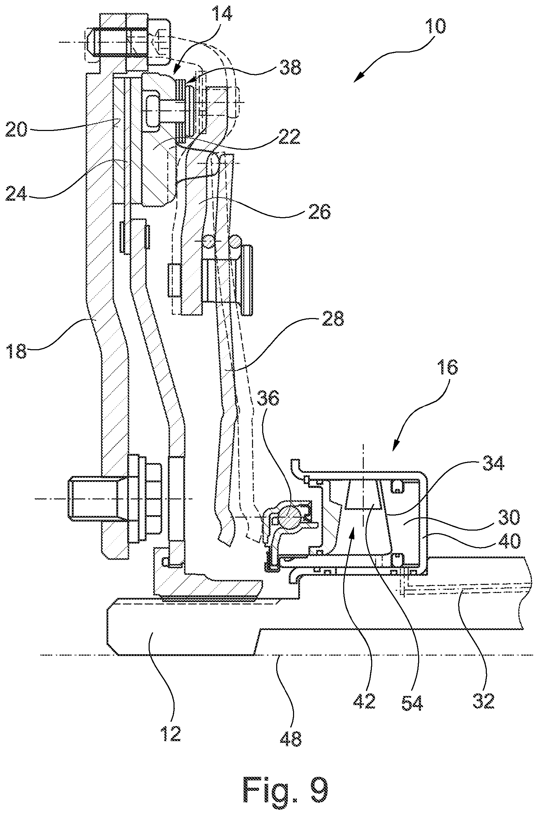

Bei dem in Fig. 9 dargestellten Ausführungsbeispiel des Hybridmoduls 10 ist im Vergleich zu dem in Fig. 7 dargestellten Ausführungsbeispiel des Hybridmoduls 10 bei der Kompensationseinrichtung 42 anstelle des Federelements 50 eine, insbesondere an seinen Axialseiten zur Radialebene angeschrägte, Fliehkraftmasse 54 vorgesehen, das zumindest mit der Trennwand 34 ein Rampensystem ausbildet. Unter Fliehkrafteinfluss kann die mindestens eine beispielsweise als Kontaktkonus oder kugelförmig ausgebildete Fliehkraftmasse 54 nach radial außen getrieben werden, wodurch über das Rampensystem eine mit einem Anteil in axialer Richtung ausgerichtete Kompensationskraft an der Trennwand 34 angreifen kann, wie in Fig. 10 im Detail dargestellt ist.

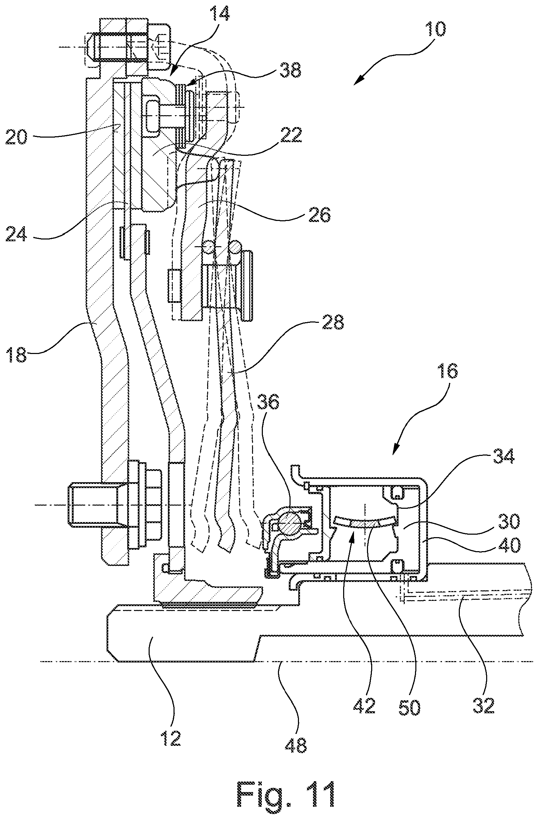

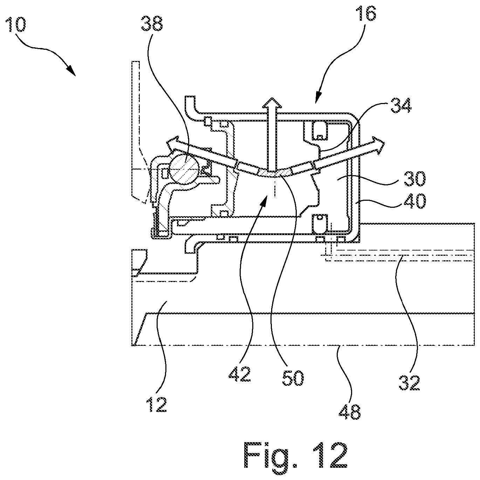

Bei dem in Fig. 11 dargestellten Ausführungsbeispiel des Hybridmoduls 10 ist im Vergleich zu dem in Fig. 9 dargestellten Ausführungsbeispiel des Hybridmoduls 10 bei der Kompensationseinrichtung 42 anstelle der Fliehkraftmasse 54 ein nach radial innen konvex verlaufendes mitrotierendes Federelement 50 im Form einer Blattfeder vorgesehen. Es können mehrere einzelne Federelement 50 vorgesehen sein oder ein einzelnes Federelement 50, das beispielsweise einen in Umfangsrichtung ringförmig geschlossenen Federring und von dem Federring mit einem Anteil in axialer Richtung und nach radial außen abstehende Federzungen aufweist. Unter Fliehkrafteinfluss kann der konvexe Teil des Federelements 50 nach radial außen getrieben werden, wodurch sich die axiale Erstreckung des Federelements 50 erhöht und eine Kompensationskraft auf die Trennwand aufgeprägt wird, wie in Fig. 12 im Detail dargestellt ist.

## Patentansprüche

1. Hybridmodul für einen Antriebsstrang eines Kraftfahrzeugs, mit einer Trennkupplung (14) zum Kuppeln einer eingangsseitigen Antriebswelle, einer Brennkraftmaschine zum mechanischen Antrieb des Kraftfahrzeugs mit einer ausgangsseitigen Zwischenwelle (12) einer elektrischen Maschine zum elektrischen Antrieb des Kraftfahrzeugs und
einer mit der Antriebswelle oder mit der Zwischenwelle (12) mitrotierbaren Betätigungseinrichtung (16), die eine mit einer Druckquelle verbindbare Drucckammer (30) zur Bereitstellung eines mit Hilfe eines Hydraulikmittels aufbaubaren hydraulischen Betätigungsdrucks zum Betätigen der Trennkupplung (14) aufweist,
**dadurch gekennzeichnet, dass** H
die Trennkupplung (14) als normal-eingerückte Kupplung ausgestaltet ist, bei der eine Anpressplatte (22) von einer als Blattfederpaket ausgestalteten Rückstellfeder (38) geschlossen und bei einem Betätigungsdruck in der Drucckammer (30) der Betätigungseinrichtung (16) gegen die Federkraft der Rückstellfeder (38) geöffnet wird, und
wobei die Betätigungseinrichtung (16) ferner eine Kompensationseinrichtung (42) zur zumindest teilweisen Kompensation einer durch an dem Hydraulikmittel angreifenden Fliehkräfte verursachten Druckänderung in der Druckkammer (30) aufweist.

2. Hybridmodul nach Anspruch 1, wobei die Betätigungseinrichtung (16) nur eine einzige Versorgungsleitung (32) zur Versorgung der Betätigungseinrichtung (16) mit einem Hydraulikmittel aufweist, wobei die Versorgungsleitung (32) an der Kompensationseinrichtung (42) vorbei mit der Druckkammer (30) kommuniziert.

3. Hybridmodul nach Anspruch 1 oder 2, wobei die Kompensationseinrichtung (42) ausgestaltet ist ausschließlich durch an der Kompensationseinrichtung (42) angreifende Fliehkräfte eine, insbesondere über eine axial verlagerbare Trennwand (34), an der Druckkammer (30) angreifende Kompensationskraft aufzubauen.

4. Hybridmodul nach einem der Ansprüche 1 bis 3, wobei die Kompensationseinrichtung (42) ein unter Fliehkrafteinfluss verformbares und/oder verlagerbares, insbesondere als Federelement (50) ausgestaltetes, Sensierelement zum Aufbau einer mit den an dem Sensierelement angreifenden Fliehkräften korrespondierende, insbesondere über eine axial verlagerbare Trennwand (34), an der Druckkammer (30) angreifende Kompensationskraft aufweist.

5. Hybridmodul nach einem der Ansprüche 1 bis 4, wobei die Kompensationseinrichtung (42) eine Tellerfeder aufweist, wobei die Tellerfeder mit einem radial äußeren Kraftrand an einem Gehäuse (40) der Betätigungseinrichtung (16) und mit einem radial inneren Kraftrand an einer die Druckkammer (30) zumindest teilweise begrenzenden und axial verlagerbaren Trennwand (34) abgestützt ist, wobei der, insbesondere über in radialer Richtung abstehende Federzungen ausgebildeter, innere Kraftrand fliehkraftabhängig zum Aufbau einer in axialer Richtung auf die Druckkammer (30) wirkenden Kompensationskraft nach radial außen verbiegbar ist.

6. Hybridmodul nach einem der Ansprüche 1 bis 5, wobei die Kompensationseinrichtung (42) einen mit einer fluiden und/oder gelartigen und/oder pastösen Fliehkraftmasse (54) zumindest teilweise gefüllten Schlauch (52) aufweist, wobei der Schlauch (52) an einem den Schlauch (52) radial außen abdeckenden Gehäuse (40) der Betätigungseinrichtung (16) und an einem die Druckkammer (30) zumindest teilweise begrenzenden und axial verlagerbaren Trennwand (34) abgestützt ist, wobei der Schlauch (52) durch ein fliehkraftbedingtes Anpressen der Fliehkraftmasse auf das Gehäuse (40) zu gegen die Trennwand (34) zum Aufbau einer in axialer Richtung auf die Druckkammer (30) wirkenden fliehkraftabhängigen Kompensationskraft verformbar ist.

7. Hybridmodul nach einem der Ansprüche 1 bis 6, wobei die Kompensationseinrichtung (42) eine gelenkig an einem Gehäuse (40) der Betätigungseinrichtung (16) und an einem die Druckkammer (30) zumindest teilweise begrenzenden und axial verlagerbaren Trennwand (34) abgestützte Fliehkraftmasse (54) aufweist, wobei die Fliehkraftmasse (54), insbesondere in der Art eines Kniehebels, unter Fliehkrafteinfluss die Trennwand (34) zum Aufbau einer in axialer Richtung auf die Druckkammer (30) wirkenden fliehkraftabhängigen Kompensationskraft die Trennwand (34) axial verlagert.

8. Hybridmodul nach einem der Ansprüche 1 bis 7, wobei die Kompensationseinrichtung (42) ein, insbesondere als Schraubendruckfeder oder Blattfeder, ausgestaltetes nach radial innen konvex verlaufendes Federelement (50) aufweist, wobei das Federelement (50) an einem Gehäuse (40) der Betätigungseinrichtung (16) und an einer die Druckkammer (30) zumindest teilweise begrenzenden und axial verlagerbaren Trennwand (34) abgestützt ist, wobei das Federelement (50) zum Aufbau einer in axialer Richtung auf die Druckkammer (30) wirkenden fliehkraftabhängigen Kompensationskraft unter steigendem Fliehkrafteinfluss das Ausmaß seiner Konvexität reduziert.

9. Hybridmodul nach einem der Ansprüche 1 bis 8, wobei die Kompensationseinrichtung (42) eine an einem Gehäuse (40) der Betätigungseinrichtung (16) und an einem die Druckkammer (30) zumindest teilweise begrenzenden und axial verlagerbaren Trennwand (34) über ein zur Radialebene angeschrägtes Rampensystem abgestützte Fliehkraftmasse (54) aufweist, wobei die die Fliehkraftmasse (54) unter Fliehkrafteinfluss die Trennwand (34) zum Aufbau einer in axialer Richtung auf die Druckkammer (30) wirkenden fliehkraftabhängigen Kompensationskraft die Trennwand (34) axial verlagert.

10. Hybridmodul nach einem der Ansprüche 1 bis 9, wobei die Betätigungseinrichtung (16) drehfest mit der Antriebswelle oder mit der Zwischenwelle (12) verbunden ist, wobei die mit der Betätigungseinrichtung (16) drehfest verbundene Antriebswelle oder Zwischenwelle (12) eine Versorgungsbohrung zur Versorgung der Druckkammer (30) mit dem Hydraulikfluid aufweist.

## Claims

1. A hybrid module for a drive train of a motor vehicle, having
a disconnect coupling (14) for coupling an input-side drive shaft of an internal combustion engine for mechanically driving the motor vehicle to an output-side intermediate shaft (12) of an electric machine for electrically driving the motor vehicle, and
an actuating device (16), which can be rotated together with the drive shaft or with the intermediate shaft (12) and which has a pressure chamber (30) which can be connected to a pressure source to provide a hydraulic actuation pressure which can be built up with the help of a hydraulic medium to actuate the disconnect coupling (14),
**characterised in that**
the disconnect coupling (14) is designed as a normally-engaged clutch, in which a pressing plate (22) is closed by a return spring (38) designed as a leaf spring assembly and is opened against the spring force of the return spring (38) when there is an actuation pressure in the pressure chamber (30) of the actuating device (16), and
wherein the actuating device (16) also has a compensation device (42) for at least partially compensating for a pressure change in the pressure chamber (30) caused by centrifugal forces acting on the hydraulic medium.

2. The hybrid module according to claim 1, wherein the actuating device (16) has just a single supply line (32) for supplying the actuating device (16) with a hydraulic medium, wherein the supply line (32) communicates with the pressure chamber (30) past the compensation device (42).

3. The hybrid module according to claim 1 or 2, wherein the compensation device (42) is designed to build up a compensation force acting on the pressure chamber (30) exclusively by centrifugal forces acting on the compensation device (42), in particular via an axially displaceable partition wall (34).

4. The hybrid module according to any one of claims 1 to 3, wherein the compensation device (42) has a sensing element, which is deformable and/or displaceable under the influence of a centrifugal force and which is designed in particular as a spring element (50), for building up a compensation force acting on the pressure chamber (30) corresponding to the centrifugal forces acting on the sensing element, in particular via an axially displaceable partition wall (34).

5. The hybrid module according to any one of claims 1 to 4, wherein the compensation device (42) has a disc spring, wherein the disc spring is supported with a radially outer force edge on a housing (40) of the actuating device (16) and with a radially inner force edge on an axially displaceable partition wall (34) at least partially delimiting the pressure chamber (30), wherein the inner force edge, which is formed in particular via spring tongues projecting in the radial direction, can be bent radially outwards depending on the centrifugal force to build up a compensation force acting on the pressure chamber (30) in the axial direction.

6. The hybrid module according to any one of claims 1 to 5, wherein the compensation device (42) has a hose (52) at least partially filled with a fluid and/or gel-like and/or pasty centrifugal mass (54), wherein the hose (52) is supported on a housing (40) of the actuating device (16), which housing covers the hose (52) radially on the outside, and on an axially displaceable partition wall (34) at least partially delimiting the pressure chamber (30), wherein the hose (52) can be deformed as a function of a centrifugal force pressing the centrifugal mass on the housing (40) against the partition wall (34) to build up a centrifugal force-dependent compensation force acting on the pressure chamber (30) in the axial direction.

7. The hybrid module according to any one of claims 1 to 6, wherein the compensation device (42) has a centrifugal mass (54) supported in an articulated manner on a housing (40) of the actuating device (16) and on an axially displaceable partition wall (34) at least partially delimiting the pressure chamber (30), wherein the centrifugal mass (54), in particular in the form of a toggle lever, axially displaces the partition wall (34) under the influence of centrifugal force to build up a centrifugal force-dependent compensation force acting on the pressure chamber (30) in the axial direction.

8. The hybrid module according to any one of claims 1 to 7, wherein the compensation device (42) has a spring element (50) which extends convexly radially inwards and which is designed, in particular, as a helical compression spring or leaf spring, wherein the spring element (50) is supported on a housing (40) of the actuating device (16) and on an axially displaceable partition wall (34) at least partially delimiting the pressure chamber (30), wherein under increasing centrifugal force the spring element (50) reduces the extent of its convexity to build up a centrifugal force-dependent compensation force acting on the pressure chamber (30) in the axial direction.

9. The hybrid module according to any one of claims 1 to 8, wherein the compensation device (42) has a centrifugal mass (54) supported on a housing (40) of the actuating device (16) and on an axially displaceable partition wall (34) at least partially delimiting the pressure chamber (30) via a ramp system inclined with respect to a radial plane, wherein the centrifugal mass (54) axially displaces the partition wall (34) under the influence of centrifugal force to build up a centrifugal force-dependent compensation force acting on the pressure chamber (30) in the axial direction.

10. The hybrid module according to any one of claims 1 to 9, wherein the actuating device (16) is connected to the drive shaft or to the intermediate shaft (12) in a rotationally fixed manner, wherein the drive shaft or intermediate shaft (12) connected to the actuating device (16) in a rotationally fixed manner has a supply hole for supplying the pressure chamber (30) with the hydraulic fluid.

## Revendications

1. Module hybride pour une chaîne cinématique d'un véhicule automobile, avec
un dispositif d'accouplement (14) pour accoupler un arbre d'entraînement côté entrée, un moteur à combustion interne pour entraîner mécaniquement le véhicule automobile avec un arbre intermédiaire côté sortie (12) d'une machine électrique pour entraîner électriquement le véhicule automobile et
un dispositif d'actionnement (16) qui peut tourner conjointement avec l'arbre d'entraînement ou avec l'arbre intermédiaire (12) et qui présente une chambre de pression (30) qui peut être reliée à une source de pression pour fournir une pression d'actionnement hydraulique qui peut être établie avec l'aide d'un milieu hydraulique pour actionner l'embrayage de séparation (14),
**caractérisé en ce que**
le dispositif d'accouplement (14) est configuré sous la forme d'un embrayage normalement embrayé, dans lequel un plateau de pression (22) est fermé par un ressort de rappel (38) réalisé sous la forme d'un ensemble de ressorts à lames et, lorsqu'il existe une pression d'actionnement dans la chambre de pression (30) du dispositif d'actionnement (16), est ouvert contre la force élastique du ressort de rappel (38) et
dans lequel le dispositif d'actionnement (16) comporte également un dispositif de compensation (42) pour compenser au moins partiellement une variation de pression dans la chambre de pression (30) provoquée par des forces centrifuges agissant sur le milieu hydraulique.

2. Module hybride selon la revendication 1, dans lequel le dispositif d'actionnement (16) ne comporte qu'une seule ligne d'alimentation (32) pour alimenter le dispositif d'actionnement (16) en milieu hydraulique, dans lequel la ligne d'alimentation (32) communique au niveau du dispositif de compensation (42) avec la chambre de pression (30).

3. Module hybride selon la revendication 1 ou 2, dans lequel le dispositif de compensation (42) est configuré pour accumuler une force de compensation agissant sur la chambre de pression (30) exclusivement par des forces centrifuges agissant sur le dispositif de compensation (42), en particulier par le biais d'une cloison (34) déplaçable axialement.

4. Module hybride selon l'une quelconque des revendications 1 à 3, dans lequel le dispositif de compensation (42) présente un élément sensible déformable et/ou déplaçable sous l'effet de la force centrifuge, notamment configuré sous la forme d'un élément ressort (50), pour accumuler une force de compensation agissant sur la chambre de pression (30) correspondant aux forces centrifuges agissant sur l'élément sensible, en particulier par le biais d'une cloison (34) déplaçable axialement.

5. Module hybride selon l'une quelconque des revendications 1 à 4, dans lequel le dispositif de compensation (42) présente un ressort à lames, dans lequel le ressort à lames est soutenu avec une arête de force radialement extérieure sur un boîtier (40) du dispositif d'actionnement (16) et avec une arête de force radialement intérieure sur une cloison (34) délimitant au moins partiellement la chambre de pression (30) et déplaçable axialement, dans lequel l'arête de force intérieure, qui est formée en particulier par des languettes élastiques faisant saillie dans la direction radiale, peut être courbée radialement vers l'extérieur en fonction de la force centrifuge pour accumuler une force de compensation agissant sur la chambre de pression (30) dans la direction axiale.

6. Module hybride selon l'une quelconque des revendications 1 à 5, dans lequel le dispositif de compensation (42) présente un tuyau (52) rempli au moins partiellement d'une masse centrifuge fluide et/ou gélifiée et/ou pâteuse (54), dans lequel le tuyau (52) est soutenu sur un boîtier (40) du dispositif d'actionnement (16) recouvrant le tuyau (52) radialement à l'extérieur et sur une cloison (34) délimitant au moins partiellement la chambre de pression (30) et déplaçable axialement, dans lequel le tuyau (52) est déformable par une pression par la force centrifuge de la masse centrifuge sur le boîtier (40) vers la cloison (34) afin d'accumuler une force de compensation dépendant de la force centrifuge agissant sur le chambre de pression (30) dans la direction axiale.

7. Module hybride selon l'une quelconque des revendications 1 à 6, dans lequel le dispositif de compensation (42) présente une masse centrifuge (54) soutenue de manière articulée sur un boîtier (40) du dispositif d'actionnement (16) et sur une cloison (34) délimitant au moins partiellement la chambre de pression (30) et déplaçable axialement, dans lequel la masse centrifuge (54), notamment sous la forme d'un levier à genou, déplace la cloison (34) axialement sous l'influence de la force centrifuge afin d'accumuler une force de compensation dépendant de la force centrifuge agissant sur la chambre de pression (30) dans la direction axiale de la cloison (34).

8. Module hybride selon l'une quelconque des revendications 1 à 7, dans lequel le dispositif de compensation (42) présente un élément ressort (50) qui est configuré en particulier sous la forme d'un ressort de compression hélicoïdal ou d'un ressort à lame et s'étend de manière convexe radialement vers l'intérieur, dans lequel l'élément ressort (50) est soutenu sur un boîtier (40) du dispositif d'actionnement (16) et sur une cloison (34) délimitant au moins partiellement la chambre de pression (30) et déplaçable axialement, dans lequel l'élément ressort (50) réduit l'ampleur de sa convexité pour l'accumulation d'une force de compensation dépendant de la force centrifuge agissant sur la chambre de pression (30) dans la direction axiale sous l'influence de la force centrifuge croissante.

9. Module hybride selon l'une quelconque des revendications 1 à 8, dans lequel le dispositif de compensation (42) présente une masse centrifuge (54) soutenue sur un boîtier (40) du dispositif d'actionnement (16) et sur une cloison (34) délimitant au moins partiellement la chambre de pression (30) et déplaçable axialement par le biais d'un système de rampes biseauté par rapport au plan radial, dans lequel la masse centrifuge (54) déplace axialement la cloison (34) sous l'influence de la force centrifuge pour accumuler une force de compensation dépendant de la force centrifuge agissant sur la chambre de pression (30) dans la direction axiale de la cloison (34).

10. Module hybride selon l'une quelconque des revendications 1 à 9, dans lequel le dispositif d'actionnement (16) est lié à l'arbre d'entraînement ou à l'arbre intermédiaire (12) solidaire en rotation, dans lequel l'arbre d'entraînement ou arbre intermédiaire (12) solidaire en rotation au dispositif d'actionnement (16) présente un alésage d'alimentation pour alimenter la chambre de pression (30) en fluide hydraulique.
